# DEMANDE DE BREVET EUROPEEN

(11) **EP 1 020 122 A1**
(43) Date de publication de la demande: **19.07.2000**
(21) Numéro de dépôt: 98204458.8
(22) Date de dépôt: 29.12.1998
(51) Int. Cl.: A23G 9/02, A23G 9/14, A23G 9/08

(54) **Dessert glacé et procédé de fabrication**

(71) Demandeur: SOCIETE DES PRODUITS NESTLE S.A., 1800 Vevey (CH)
(72) Inventeur: Laffont, Jérôme, 60000 Beauvais (FR); Gueroult, Alain, 60000 Goincourt (FR)
(74) Mandataire: Archambault, Jean

(57) **Abrégé**

Le dessert glacé, qui est micro-ondable, comprend un noyau de confiserie glacée, un enrobage de composition semi-fluide à caractère isolant vis-à-vis des micro-ondes entourant partiellement ou totalement le dit noyau, une couche de biscuit servant de support à l'ensemble noyau-enrobage, l'enrobage et le biscuit étant disposés de sorte que le noyau soit entièrement entouré et une couche de sauce à caractère absorbant vis-à-vis des micro-ondes.

## Description

L'invention se rapporte au domaine des desserts glacés prêts à la consommation par simple décongélation, en particulier dans un four à micro-ondes. Elle a trait à un dessert tout prêt facile à présenter en portion avec une sauce destiné à la consommation ménagère et pour grands consommateurs tels que les restaurants, les cantines de collectivités et le catering.

La tendance actuelle en matière de dessert glacé est de procurer au consommateur un produit élaboré, par exemple un gâteau glacé sur un biscuit avec une sauce, notamment un coulis de fruits, une crème ou un sirop, qui puisse être préparé directement sur une assiette par simple ouverture d'un conditionnement de type "flow-pack" ou blister ou par démoulage à partir d'un conditionnement de type moule en forme de coupelle, notamment en matière plastique formée.

On connait, par exemple de FR-A-2482425, un dispositif de fabrication de dessert glacé du type omelette norvégienne. Un tel dessert est constitué d'une base en biscuit, d'un noyau de crème glacée placé sur le biscuit et d'un nappage du noyau avec une composition aérée semi-fluide du type meringue et ne comporte pas de sauce.

Dans FR-A-2459186, par exemple, on décrit un moule de conditionnement pour gâteau glacé avec sirop de nappage à usage familial. La configuration du moule est telle que la confiserie glacée est séparée nettement du sirop lors du remplissage, de sorte qu'il n'est pas nécessaire de conditionner le sirop dans un emballage séparé. Un tel dessert n'est pas adapté au réchauffement par les micro-ondes.

L'invention concerne un dessert composite congelé susceptible d'être consommé après réchauffement par les micro-ondes, comprenant un noyau de confiserie glacée, un enrobage de composition semi-fluide à caractère isolant vis-à-vis des micro-ondes entourant partiellement ou totalement le dit noyau, une couche de biscuit servant de support à l'ensemble noyau-enrobage, l'enrobage et le biscuit étant disposés de sorte que le noyau soit entièrement entouré et une couche de sauce à caractère absorbant vis-à-vis des micro-ondes.

Un noyau de confiserie glacée selon l'invention peut être une crème glacée, une glace au lait, une glace à l'eau, un sorbet ou un produit laitier fermenté congelé plus ou moins foisonné. Une telle confiserie glacée peut être composite, c'est à dire contenir plusieurs compositions glacées de type semblable ou différent juxtaposées, par exemple en couches superposées, en anneaux concentriques ou par sections radiales ou encore être marbrée avec une autre composition glacée ou avec une sauce ou un sirop. La confiserie glacée peut contenir des annexes en couches minces ou en morceaux, par exemple de composition grasse du genre chocolat, à base de sucre comme du sucre cuit, du praliné, du croquant, du nougat, de la nougatine, du caramel ou à base de gel, de gommes. Elle peut contenir des morceaux de fruits secs, en purée, confits ou à l'alcool. La confiserie glacée contient de préférence 30 à 42 % en poids de matières sèches.

A titre d'enrobage, on entend selon l'invention une composition semi-fluide pour dessert plus ou moins aérée. Ce peut être un flan, un gâteau au riz ou à la semoule, une crème aux oeufs, un bavarois, un blanc d'oeuf battu, de préférence sucré. Il peut s'agir d'une composition contenant un agent gélifiant ou épaississant, par exemple un marshmallow. La composition d'enrobage peut contenir des annexes telles que, par exemple celles mentionnées précédemment en liaison avec la confiserie glacée. Selon l'invention, il est préférable que la composition d'enrobage constitue un isolant vis-à-vis des micro-ondes. Elle est de préférence composée de manière prépondérante de protéines et d'hydrates de carbone et contient relativement peu de matières grasses et peu d'eau. Elle contient notamment 42 à 50 % en poids de matières sèches. Elle est avantageusement aérée, de préférence avec un foisonnement élevé, de l'ordre de 100 à 300 % en volume.

La couche de biscuit servant de support peut être constituée de tout biscuit utilisable dans les confiseries glacées du type des sandwiches, des gâteaux ou des cônes . Ce peut être une gaufrette, un biscuit feuilleté du genre pâte à filo, pâte à strudel ou un biscuit reconstitué par agglomération de particules avec un liant. Sa teneur en matières sèches est de préférence 70 à 90 % en poids. C'est de préférence une pâte à gateau du type génoise. De par sa constitution, un tel biscuit constitue un isolant vis-à-vis des micro-ondes. De plus, le biscuit doit absorber le minimum de sauce devenue liquide aussi bien lors du dosage que lors de la reconstitution pour la consommation.

Contrastant avec la composition de la confiserie glacée, de la couche d'enrobage et du biscuit qui ont une teneur en eau relativement faible, la couche de sauce a une teneur en eau relativement élevée de manière à constituer un absorbant vis-à-vis des micro-ondes. Sa teneur en matières sèches est notamment 35 à 70 % en poids. Ce peut être un sirop, un coulis ou une purée de fruits ou une crème pâtissière au lait et aux oeufs, par exemple une crème anglaise. Dans le cas d'une sauce à base de fruits, la matière sèche peut être relativement élevée bien que la sauce contienne une quantité relativement importante d'eau libre. Dans le cas d'une crème ou d'une sauce au chocolat, la quantité de matière sèche peut être relativement faible et une partie relativement importante de l'eau être liée. Une telle sauce peut contenir des annexes, de préférence sous forme de petits morceaux.

Un des buts de l'assemblage des différents constituants du dessert est de réaliser des contrastes de texture, couleur, goût et température lors de la consommation.

Un autre but de l'assemblage des différents constituants du dessert est leur disposition géométrique et son effet sur le degré de réchauffement par les micro-ondes. Ainsi le noyau de confiserie glacée est placé de manière à être attaqué plus tard que la sauce par les micro-ondes. Le fait que la sauce soit disposée à un endroit proche du plateau d'un four à micro-ondes favorise son attaque en premier, puisque ce qui se trouve au voisinage du plateau se réchauffe en premier en fonction de la répartition des ondes. Dans le même ordre d'idées, l'épaisseur du biscuit, de préférence de 5 à 10 mm, maintient en hauteur le noyau de confiserie glacée et l'éloigne du plateau.

L'invention concerne également un procédé de fabrication du dessert glacé précédent, dans lequel on réalise les opérations successives suivantes:
on remplit un moule ouvert avec son ouverture se présentant vers le haut,
d'une composition semi-fluide et d'une composition de confiserie glacée, de sorte que la composition semi-fluide entoure la composition de confiserie glacée,
on dépose un biscuit,
on dose une sauce liquide et
on congèle rapidement le moule et son contenu.

On peut démouler le contenu congelé et le conditionner en sachets ou en blisters, puis suremballer les sachets ou blisters dans des cartons.

Le cas échéant le produit peut être démoulé par le consommateur et dans ce cas, le moule fait partie de l'emballage et le produit est alors suremballé dans son moule.

Selon le procédé, on confectionne des couches successives des différents constituants.

Selon le procédé, le dosage de la sauce est réalisé aprés la dépose du biscuit. Un avantage de cette manière de faire est de faciliter la séparation des différentes couches.

De préférence, le moule peut être en forme d'une coupelle, de forme générale hémisphérique, pouvant avoir une paroi latérale gaufrée et présenter des festons disposés radialement depuis le sommet donnant un aspect décoratif au dit moule tout en servant de raidisseurs. A son sommet, la coupelle comporte avantageusement une dépression ou concavité en vue de faciliter le démoulage.

A proximité de son ouverture, le moule comporte avantageusement un trottoir dont le rôle est, en coopération avec le biscuit, de maintenir la sauce séparée de la composition d'enrobage jusqu'à la congélation des différentes couches.

Le moule peut être métallique, par exemple en aluminium embouti ou de préférence en matière plastique. On peut utiliser toute matière plastique thermoformable ou moulable par injection, à usage alimentaire telle que par exemple le chlorure de polyvinyle, le polypropylène, le polyéthylène, le polystyrène, le polycarbonate, le polystyrène étant préféré lorsqu'il s'agit d'un moule perdu. On peut également utiliser un copolymère ou un matériau composite. Le matériau utilisé doit avoir une épaisseur telle qu'il soit suffisamment rigide tout en ayant la souplesse nécessaire pour faciliter le démoulage, par exemple par pression sur la couronne du fond du moule.

Le procédé comprend ainsi le remplissage de moules en défilement, successivement de composition semi-fluide, d'un noyau de confiserie glacée qui, en déplaçant une partie de la composition semi-fluide, vient se placer au coeur ce cette dernière, la dépose d'un biscuit dont la forme est adaptée pour rentrer dans le du moule, puis le dosage de la sauce. Il n'est pas nécessaire que la forme du biscuit épouse celle du moule.

Ces opérations peuvent avoir lieu durant le défilement des moules dans un bain de saumure ou par refroidissement cryogénique rapide dans un tunnel de congélation, par exemple à l'azote ou à air très froid. On peut également congeler le produit dans un tunnel de surgélation classique. Une fois durci au moins en surface, l'ensemble des différentes couches formant le contenu du moule est démoulé, par exemple après réchauffement superficiel et reversement des moules, puis ensaché en flow-pack ou déposé sur un blister et suremballé en cartons. En variante on ne démoule pas le produit et on le conditionne avec son moule, par exemple en cartons.

Les caractéristiques et avantages de l'invention ressortent de la description ci-après d'un mode de réalisation de l'invention donné à titre d'exemple par référence aux dessins schématiques annexés. Les parties et poucentages sont en poids, sauf indication contraire. Dans les dessins:
la figure 1 est une vue d'ensemble de la fabrication du dessert, montrant les différentes opérations,
la figure 2 est une coupe du dessert congelé une fois démoulé et
la figure 3 est une vue de dessus et en perspective du dessert une fois réchauffé et prêt à la consommation.

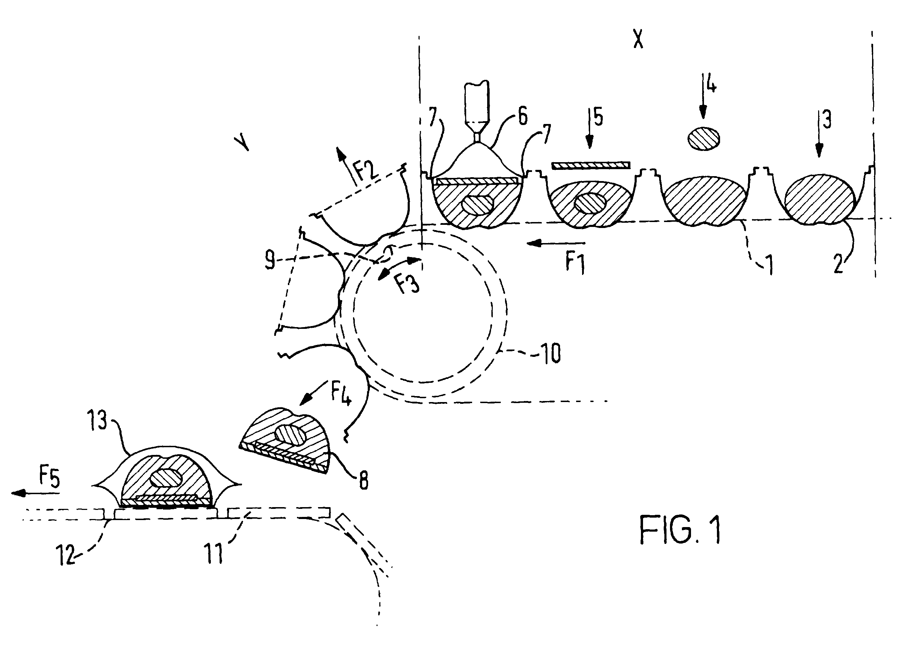

A la figure 1, une chaîne sans fin 1 cheminant pas à pas transporte les moules 2 avec leur ouverture vers le haut dans la direction de la flèche f1 dans une zône de congélation X. Cette zône se caractérise par des moyens de refroidissement non représentés constitués par exemple par un bac de saumure dans lequel les moules 2 cheminent, portés par des cadres. La zône de refroidissement peut également comporter une circulation de fluide cryogénique gazeux, par exemple d'air ou d'azote à la surface des moules. On peut utiliser ces moyens de refroidissement individuellement. On peut également faire la congélation dans un tunnel surgélation classique après avoir rempli les moules sur une chaîne simple en dehors du dit tunnel.

On dépose dans le fond du moule 2 une composition semi-fluide de blanc d'oeuf 3 battu ferme meringué, contenant environ 46 % de matières sèches, foisonné à environ 175 % en volume. On dose ensuite un noyau de crème glacée 4, dont la teneur en matières sèches est environ 32%, foisonné à environ 100% en volume, par exemple au moyen d'une tête doseuse à diaphragme. Du fait de la différence de densité entre le blanc d'oeuf et la crème glacée, le noyau de crème glacée pénêtre dans la couche de blanc d'oeuf et en déplace une partie qui vient recouvrir le noyau et s'étaler à la surface. On peut également opérer ces deux dosages simultanément, par exemple en utilisant une doseuse concentrique.

On dépose ensuite un biscuit 5, par exemple une génoise dont la forme généralement circulaire peut épouser la forme du moule et venir à proximité de sa paroi.

On dose enfin une sauce liquide 6, dont la teneur en eau est 30 à 65 % selon sa nature. Celle-ci vient se placer dans le trottoir 7 du moule 2 dont le rôle est, en coopérant avec le biscuit 5, de contribuer à séparer la sauce 6 des autres constituants, en particulier du blanc d'oeuf 3.

Le moule 2 sort ensuite de la zône de congélation X et est réchauffé par dessous, par exemple par contact avec de la saumure chaude, cette opération n'étant pas représentée, puis passe dans une zône de démoulage Y. Le contenu congelé du moule 2 représente un bloc 8, constitué par l'assemblage des différents constituants, est détaché du moule 2 selon f2, par l'entremise de la came 9 qui effectue un mouvement de va et vient selon f3, mais qui peut également être fixe, puis est démoulé en basculant et en étant libéré selon f4 par retournement du moule 2 sur la roue 10 à l'extrémité de la chaîne 1.

Le bloc 8, une fois retourné, est repris sur une plaque 11 de la chaîne sans fin 12 cheminant pas à pas selon f5, puis ensaché en flow-pack transparent 13. Le tout est suremballé en carton et dirigé vers un tunnel de durcissement, ces opérations n'étant pas représentées.

Dans le cas non représenté où le remplissage du moule 2 s'effectue sur une chaîne simple, on durcit ensuite le produit dans son moule par passage dans un tunnel de surgélation et on transporte le produit dans son moule tête en bas et avec la sauce en haut, puis on le réchauffe dans un tunnel à infra rouge, ce qui a pour effet de décoller la sauce du moule. On démoule ensuite le produit après retournement. On peut également mettre le produit en carton dans son moule et le produit est alors démoulé par le consommateur ou le restaurateur.

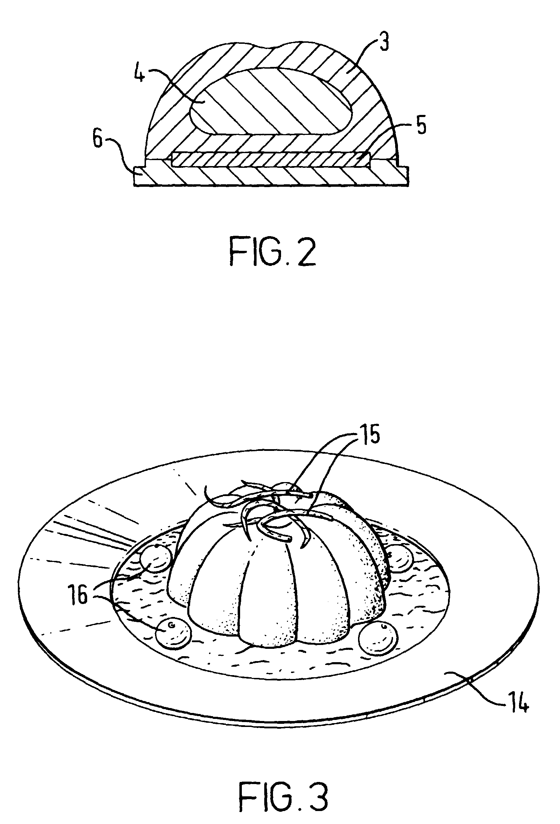

Comme représenté à la figure 2, le dessert congelé comprend, en volume du dessert, un noyau 4 de crème glacée à la vanille représentant environ 30 %, un enrobage de blanc d'oeuf 3 meringué à la framboise représentant environ 50 %, un biscuit génoise 5 représentant environ 10 % et une sauce 6 aux fruits rouges représentant environ 10 %.

Dans un deuxième exemple, le noyau 4 est une crème glacée au rhum contenant des morceaux de raisins rhumés, l'enrobage 3 un blanc d'oeuf meringué au café et la sauce 6 une sauce au chocolat.

Dans un troisième exemple, le noyau 4 est une crème glacée à la vanille, l'enrobage 3 un blanc d'oeuf meringué à la vanille et la sauce 6 une crème anglaise.

Dans un quatrième exemple, le noyau 4 est un sorbet à la poire, l'enrobage 3 un blanc d'oeuf meringué à la poire et la sauce 6 une sauce au chocolat.

La figure 3 montre le dessert une fois passé dans un four à micro-ondes de 900 W pendant environ 20 s., sur une assiette 14. La sauce 6 fond et vient s'étaler dans l'assiette. Le fait que la sauce soit fondue est un bon indicateur: celà signifie que le produit est prêt à être présenté ou consommé, indépendemment du temps de passage aux micro-ondes ou de la puissance effective du four. En effet, une surchauffe du produit peut engendrer la fonte du noyau, cependant qu'un réchauffage insuffisant ne permet pas à la sauce de fondre. L'enrobage de meringue 3 reste ferme de même que le biscuit 5 et le noyau 4. La préparation du dessert est très simple et très rapide. Bien entendu, le dessert peut être dégusté comme un dessert glacé classique rapidement après avoir été sorti du congélateur ou après tempérage à la température ambiante.

Un autre avantage du dessert selon l'invention est que la préparation du produit peut être facilement agrémentée par l'addition d'annexes décoratives 15, 16, comme par exemple des morceaux de fruits confits sur l'enrobage et des petits fruits rouges dans la sauce.

## Revendications

1. Dessert composite congelé susceptible d'être consommé après réchauffement par les micro-ondes, comprenant un noyau de confiserie glacée, un enrobage de composition semi-fluide à caractère isolant vis-à-vis des micro-ondes entourant partiellement ou totalement le dit noyau, une couche de biscuit servant de support à l'ensemble noyau-enrobage, l'enrobage et le biscuit étant disposés de sorte que le noyau soit entièrement entouré et une couche de sauce à caractère absorbant vis-à-vis des micro-ondes.

2. Dessert selon la revendication 1, dans lequel le réchauffement par les micro-ondes liquéfie la sauce, ce qui indique que le dessert est prêt à être consommé.

3. Dessert selon la revendication 1, dans lequel la disposition géométrique des différents constituants tient compte de la répartition des micro-ondes et est ainsi adaptée au degré de réchauffement par les micro-ondes, le noyau de confiserie glacée est placé au centre géométrique du produit, de manière à être attaqué plus tard que la sauce par les micro-ondes, la sauce est disposée à un endroit proche du plateau d'un four à micro-ondes de manière à favoriser son attaque en premier et l'épaisseur du biscuit, notamment de 5 à 10 mm, maintient en hauteur le noyau de confiserie glacée et l'éloigne du plateau.

4. Dessert selon la revendication 1, dans lequel le noyau contient 30 à 42 % en poids de matières sèches, l'enrobage contient 42 à 50 % en poids de matières sèches et la sauce contient 35 à 70 % en poids de matières sèches.

5. Dessert selon la revendication 1, dans lequel le noyau de confiserie glacée est une crème glacée, une glace au lait, une glace à l'eau, un sorbet ou un produit laitier fermenté congelé plus ou moins foisonnés.

6. Dessert selon la revendication 1, dans lequel l'enrobage est une composition semi-fluide pour dessert plus ou moins aérée, notamment une crème aux oeufs, un bavarois, un blanc d'oeuf battu, de préférence meringué.

7. Dessert selon la revendication 1, dans lequel le biscuit constitue un isolant vis-à-vis des micro-ondes, sa teneur en matières sèches est 70 à 90 % en poids et il n'absorbe qu'un minimum de sauce devenue liquide lors de la reconstitution pour la consommation.

8. Dessert selon la revendication 1, dans lequel la sauce est un sirop, un coulis ou une purée de fruits ou une crème pâtissière au lait et aux oeufs, notamment une crème anglaise.

9. Procédé de fabrication d'un dessert congelé selon la revendication 1, dans lequel on réalise les opérations successives suivantes:
on remplit un moule ouvert avec son ouverture se présentant vers le haut,
d'une composition semi-fluide et d'une composition de confiserie glacée, de sorte que la composition semi-fluide entoure la composition de confiserie glacée,
on dépose un biscuit,
on dose une sauce liquide et
on congèle rapidement le moule et son contenu.

10. Procédé selon la revendication 8, dans lequel on remplit des moules en défilement, successivement de composition semi-fluide, d'un noyau de confiserie glacée qui, en déplaçant une partie de la composition semi-fluide, vient se placer au coeur ce cette dernière, on dépose un biscuit, puis on dose la sauce.

11. Procédé selon la revendication 8, dans lequel on démoule le contenu congelé et on le conditionne en sachets ou en blisters, puis on suremballe les sachets ou blisters dans des cartons.

12. Procédé selon la revendication 8, dans lequel on emballe le produit dans son moule, puis on suremballe le tout.

13. Procédé selon la revendication 8, dans lequel le moule est en forme d'une coupelle, de forme générale hémisphérique, a notamment une paroi latérale gaufrée et présentant des festons disposés radialement depuis le sommet donnant un aspect décoratif au dit moule tout en servant de raidisseurs, la coupelle comporte une dépression ou concavité en vue de faciliter le démoulage et le moule comporte un trottoir dont le rôle est, en coopération avec le biscuit, de maintenir la sauce séparée de la composition d'enrobage jusqu'à la congélation des différentes couches.
